# EUROPÄISCHE PATENTSCHRIFT

(11) **EP 3 191 288 B1**
(45) Veröffentlichungstag und Bekanntmachung des Hinweises auf die Patenterteilung: **04.04.2018**
(21) Anmeldenummer: 15781850.1
(22) Anmeldetag: 09.09.2015
(51) Int. Cl.: B29C 47/10, B29C 47/92, G01N 11/04, B29B 7/24

(54) **VORRICHTUNG FÜR DIE HERSTELLUNG UND ZUM TESTEN VON WERKSTÜCKEN**
DEVICE FOR PRODUCING AND TESTING WORKPIECES
DISPOSITIF POUR LA PRODUCTION ET POUR TESTER DE PIÈCES

(30) Priorität: 10.09.2014 AT 506242014; 17.12.2014 AT 509202014
(43) Veröffentlichungstag der Anmeldung: 19.07.2017
(73) Patentinhaber: Next Generation Analytics GmbH, 4710 Grieskirchen (AT)
(72) Erfinder: KASTNER, Friedrich, A-4710 Grieskirchen (AT)
(74) Vertreter: Burger, Hannes
(86) Internationale Anmeldenummer: PCT/AT2015/050219
(87) Internationale Veröffentlichungsnummer: WO 2016/037206

(56) Entgegenhaltungen:
- EP-A1- 1 820 568
- EP-A2- 2 551 659
- WO-A1-2006/103184
- DE-A1- 2 406 686
- DE-A1- 10 150 796
- DE-A1-102005 046 286
- DE-A1-102010 004 794
- DE-A1-102012 025 259
- JP-A- S5 884 742

## Beschreibung

Die Erfindung betrifft eine Vorrichtung für die Herstellung und zum Testen von Werkstücken, insbesondere von Kunststoffen.

Die Erfindung ist besonders gut für die Kunststoffherstellung geeignet. Daher kann im Folgenden der Begriff "Werkstoff" insbesondere als "Kunststoff" verstanden werden.

Es ist aber auch möglich, die Erfindung in anderen Bereichen einzusetzen, in denen mit Schmelzen oder Mixturen gearbeitet wird. So ist der Begriff "Werkstoff" bezüglich dieser Bereiche auch anders zu verstehen, etwa im Sinne von "Metallwerkstoff" im Rahmen der Metallherstellung oder im Sinne von "Wirkstoff" oder "Pharmaziewerkstoff" im Rahmen der Wirkstoffträgerherstellung.

In der Kunststoffherstellung und Verarbeitung findet sich eine große Vielfalt an verwendeten Kunststoffwerkstoffen, deren Reinheit und Qualität zuweilen stark schwankt. Ein genormtes Verfahren zur Bestimmung von Werkstoffkenngrößen ist der Druckfiltertest, der z.B. mit der DIN EN 13900-5 "Bestimmung mit dem Druckfiltertest" normiert ist.

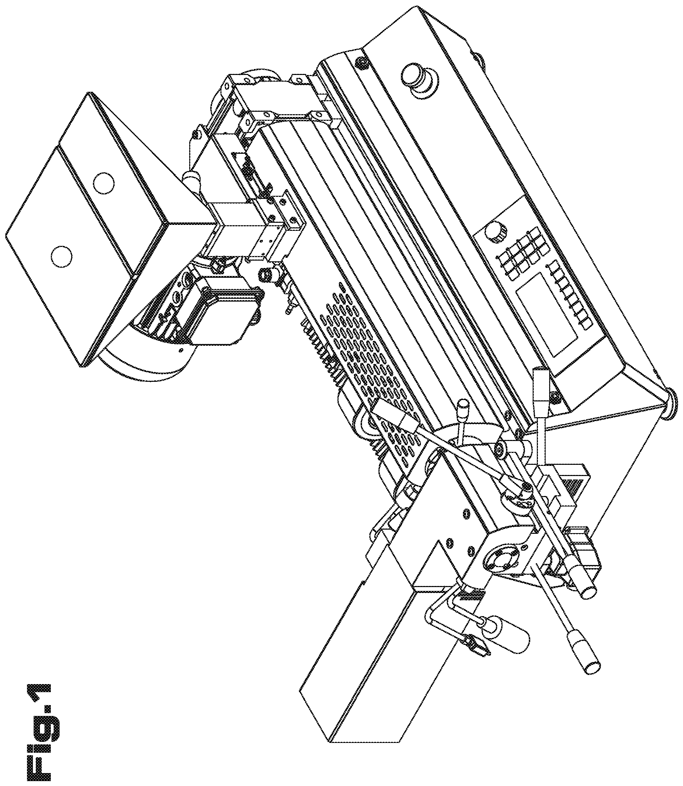

In Figur 1 ist eine Vorrichtung zur Herstellung von Kunststoffmaterialien mit einer Vorrichtung zum Druckfiltertest des Standes der Technik dargestellt, welche einen internationalen Standard zur Bestimmung von Verunreinigungen (z.B. Agglomeraten) in Kunststoffen und ähnlichen Medien erfüllt und definiert. über den dort sichtbaren Trichter wird ein Kunststoffmaterial oder eine Mischung aus mehreren Kunststoffmaterialien in die Vorrichtung hineingegeben. Mittels der Vorrichtung wird ein durch z.B. einen Extruder aufgeschmolzener Kunststoff durch ein definiertes Filtermodul (z.B. einen Gewebefilter oder ein Sieb) gepresst und die Druckerhöhung vor dem Filtermodul während der Extrusion einer definierten Materialmenge aufgezeichnet. Diese stellt dann ein Maß für die Dispergierqualität oder Reinheit des Materials dar, da Agglomerate, sonstiger nicht aufgeschmolzener Partikel und nicht ausreichend dispergierter Füllstoffe, z. B. Pigmente, in dem Filtermodul zurückgehalten werden, was aufgrund eines fortlaufenden Zusetzens des Filtermoduls zu einem Druckanstieg führt.

Nachteil des Standes der Technik ist, dass nach jeder einzelnen Messung der Apparat gespült, der Trichter ggf. geleert und der Filter manuell gewechselt werden muss. Dadurch kann immer nur ein Material je Bedienereingriff getestet werden.
Die JP S58 84742 A offenbart eine Dosiervorrichtung, welche mit einem Werkstoffeinlass eines Extruders verbunden ist. Die Dosiervorrichtung umfasst mehrere Vorratsbehälter, die längs des Umfangs einer Scheibe befestigt sind, und eine Steuervorrichtung. Die Scheibe ist drehbar, sodass die Vorratsbehälter mittels der Scheibe bewegbar sind. Die Steuervorrichtung ist vorgesehen, die Bewegung der Scheibe zu steuern.
Die EP 2 551 659 A2 offenbart eine Vorrichtung zum Prüfen der Reinheit und/oder der rheologischen Eigenschaften einer Kunststoffschmelze. Die Vorrichtung umfasst einen Extruder, der eingerichtet ist, die Kunststoffschmelze herzustellen, und eine mit dem Extruder verbundene Drucktestvorrichtung. Die Drucktestvorrichtung umfasst eine Pumpe zum Fördern der Kunststoffschmelze durch einen Kanal zu mindestens einer Messzelle und eine Schiene, auf der die Messzellen mittels einer mechanische Verschiebung für einen Wechsel geführt sind. Das Wechselsystem ermöglicht ein automatisches Austauschen der Messzellen hinsichtlich ihrer Position. Aufgabe der vorliegenden Erfindung war es, die Nachteile des Standes der Technik zu überwinden und eine Vorrichtung zur Verfügung zu stellen, mittels derer ein Benutzer in der Lage ist, variabel mit Werkstoffen bzw. Werkstücken umzugehen, und insbesondere die Herstellung und/oder Materialanalyse von Werkstoffen bzw. Werkstücken zu optimieren, beziehungsweise die Reinheit durch Verwendung unterschiedlicher Filter (grob, mittel, fein, etc.) besser zu charakterisieren.
Diese Aufgabe wird durch eine Vorrichtung gemäß dem Anspruch 1 gelöst.
Ein spezieller Aspekt der Erfindung ist eine Vorrichtung zum Prüfen der Reinheit einer Werkstoffschmelze (z.B. Kunststoffschmelze) durch Hindurchpressen einer genau definierten Menge einer Schmelze durch ein Filtermodul mit definierten Kenngrößen bei gleichzeitiger Messung des Schmelzedrucks, welcher sich vor dem Filtermodul aufbaut. Dies wird im Allgemeinen als "Druckfiltertest" bezeichnet. Eine solche Vorrichtung wird auch als "Druckfiltertestvorrichtung" bezeichnet.

Ein weiterer spezieller Aspekt der Erfindung ist eine Vorrichtung zum variablen und insbesondere gesteuerten Herstellen von Werkstücken, insbesondere von Testsampeln mit unterschiedlichen Eigenschaften aus variablen Werkstoffen und variablen Werkstoffanteilen. Eine solche Vorrichtung wird auch als "Dosiervorrichtung" bezeichnet, und ein solches Verfahren als "Dosierverfahren".

Mittels einer Kombination aus Applikationsvorrichtung zusammen mit einer Druckfiltertestvorrichtung ist die gesteuerte Herstellung von Werkstücken höchster Qualität möglich. Zugleich wird die Möglichkeit eines Tests mannigfaltiger Werkstücke aus unterschiedlichsten Mixturen von Werkstoffen eröffnet, ohne dass der Herstellungsprozess nennenswert unterbrochen werden müsste.

Die erfindungsgemäße Vorrichtung für die Herstellung und zum Testen von Werkstücken ist dermaßen gestaltet, dass sie ein System zum Mischen oder Aufschmelzen von Werkstoffen umfasst, und die Vorrichtung Applikationseinheiten und ein Wechselsystem umfasst, welches dazu ausgelegt ist, Applikationseinheiten automatisch bezüglich ihrer Position oder ihrer Funktion auszuwechseln.

Der Begriff "Applikationseinheit" bezieht sich auf ein Vorratsmodul, welches Stoffe oder Stoffgemische enthält, insbesondere Kunststoffgranulate, Farbpigmente oder Zusatzstoffe (Additive) oder auf ein Filtermodul, mit dem ein Druckfiltertest durchgeführt werden kann.

Der Begriff "Automatisch auswechseln" bedeutet dabei bezüglich der Position, dass Applikationseinheiten (zumindest relativ zu einem Entnahmesystem) mittels des Wechselsystems so bewegt werden, insbesondere durch Schieben, Ziehen oder Drehen, so dass eine Applikationseinheit an die Position einer anderen Applikationseinheit bewegt werden kann während die andere Applikationseinheit von dieser Position wegbewegt wird (gleichzeitig oder sukzessive), ohne dass ein Benutzer diese Applikationseinheiten berühren muss oder manuell tätig werden muss.

Der Begriff "Automatisch auswechseln" bedeutet dabei bezüglich der Funktion, dass eine Füllung oder Entleerung von Applikationseinheiten mittels des Wechselsystems so kontrolliert wird, dass eine Applikationseinheit unabhängig von einer anderen Applikationseinheit befüllt oder entleert wird, ohne dass ein Benutzer die betreffenden Applikationseinheiten berühren muss oder manuell tätig werden muss.

Bei einer bevorzugten Ausführungsform umfasst das Wechselsystem eine Haltestruktur zum Halten der Applikationseinheiten und ein Bewegungssystem (insbesondere mit elektrischen, mechanischen, pneumatischen oder hydraulischen Bewegungseinheiten) zum Bewegen der Applikationseinheiten. Des Weiteren umfasst die Vorrichtung eine Steuereinheit zur Steuerung des Wechselsystems.

Bevorzugt ist das Wechselsystem dazu ausgelegt, ein Band beinhaltend die als Filtermodule ausgebildeten Applikationseinheiten zu bewegen, oder es ist dazu ausgelegt, als Vorratsmodule Applikationseinheiten in Form von Containern oder Kartuschen zu bewegen, insbesondere linear (ggf. auch mit Weichenstrukturen) und/oder kreisförmig (insbesondere in Form eines Karussells oder Revolvers).

In dem Falle, dass die Applikationseinheiten in Form von Kartuschen vorliegen, kann das Wechselsystem in einer bevorzugten Ausführungsform an Stelle einer Bewegung oder zusätzlich zu einer Bewegung zu einer Steuerung der Funktion der Applikationseinheiten ausgelegt sein, z.B. zu einer definierten Entleerung einzelner Kartuschen oder Gruppen von Kartuschen, wobei ein "Wechsel" darin besteht, dass eine Kartusche oder eine Gruppe von Kartuschen funktional aktiviert wird (z.B. eine Entleerung angeregt wird) und danach eine andere Kartusche oder eine andere Gruppe von Kartuschen aktiviert wird (z.B. eine Entleerung angeregt wird, während insbesondere die erste Kartusche oder Kartuschengruppe wieder verschlossen wird, so dass dort keine Entleerung mehr stattfindet.

Die Vorrichtung ist so gestaltet, dass die Applikationseinheiten (z.B. Kartuschen) während des Betriebs gewechselt werden können. Dieser Wechsel wird dabei vom System vorzugsweise automatisch detektiert, z.B. mittels Sensoren, die den Besetzungszustand der Plätze der Applikationseinheiten messen oder die Entnahme/ die Hinzufügung detektieren, so kann im laufenden Betrieb die zu prüfenden Materialen bzw. die Filtermodule auch bei schon teilweiser Abarbeitung ständig durch Wechsel der Kartuschen nachgefüllt werden. Eine Identifizierung der entnommenen/hinzugefügten Applikationseinheiten findet insbesondere durch Barcodes, sonstige Zeichen, Elektronische Kennzeichen oder Transponder statt. Insbesondere messen Sensoren den Füllstand von Applikationseinheiten.

In einer bevorzugten Ausführungsform umfasst das System der Applikationseinheiten Kartuschen und ist so ausgestaltet, dass die Kartuschen auswechselbar sind und entnommen oder hinzugefügt werden können, insbesondere mittels des Wechselsystems.

Das Wechselsystem ist bevorzugt dazu ausgestattet, mit seiner Haltestruktur die Applikationseinheiten (z.B. die Kartuschen) aufzunehmen, von einer Position zu einer anderen zu bewegen. Auf diese Weise können die Applikationseinheiten (z.B. Kartuschen) in einen Schmelzestrom verbracht werden und aus diesem herausgenommen werden oder über einen Materialeinlass bewegt werden bzw. über diesem wieder entfernt werden. Bevorzugt ist die Haltestruktur des Wechselsystems in Form einer Scheibe ausgebildet und die Applikationseinheiten (z.B. die Kartuschen) werden durch Drehung und ggf. Verschiebung der Scheibe an die gewünschte Position verbracht (Karussell/Revolver).

In einer bevorzugten Ausführungsform ist die Vorrichtung so gestaltet, dass sie sowohl zur Aufnahme von Kartuschen als auch von Bändern, welche jeweils Applikationseinheiten umfassen, geeignet ist.

In einer bevorzugten Ausführungsform umfasst die Druckfiltertestvorrichtung zusätzlich eine Lagereinheit, die dazu ausgelegt ist, die Filtermodule zu lagern. Vorzugsweise ist eine solche Lagereinheit dazu geeignet, eine Rolle eines Filterbandes, das ggf. schrittweise für einen Druckfiltertest abgerollt wird, zu lagern, oder separate Filtermodule zu lagern.

Bevorzugt ist die Lagereinheit dazu ausgelegt, dass die Filtermodule entsprechend konditioniert werden, insbesondere getrocknet, gekühlt, beheizt oder befeuchtet werden.

Insbesondere ist das Wechselsystem auch dazu ausgelegt, Filtermodule aus der Lagereinheit in eine Applikationseinheit bzw. nach außen zu verbringen und/oder aus einer Applikationseinheit bzw. von außen in die Lagereinheit zu überführen und/oder von außen in eine Applikationseinheit bzw. wieder zurück nach außen zu bewegen.

Ein bevorzugtes Wechselsystem weist zusätzlich zu den vorangehend beschriebenen Strukturen noch ein Transportsystem auf, mittels dessen Applikationseinheiten aufgenommen, bewegt und wieder ausgegeben werden können. Bevorzugt umfasst das Transportsystem Elemente der Gruppe Greifer, Elektromagneten, Schieber, Förderbänder, Rollen, Sauger und Gebläse.

In einer bevorzugten Ausführungsform umfasst die Dosiervorrichtung eine Markiereinheit und ist dazu ausgelegt, die als Vorratsmodule ausgebildeten Applikationseinheiten oder das Produkt der Maschine automatisch zu kennzeichnen, insbesondere mittels Zeichen, Barcodes, RFID-Elementen, Gravuren, oder anderen Mustern. Bevorzugt umfasst die Vorrichtung dazu Drucker, Markierungselemente, Elemente zum Aufbringen von klebenden Materialien, Stanzen, oder andere Elemente zum Verändern von Oberflächen.

Die Vorrichtung ist insbesondere dazu ausgelegt, dass über ein Scanelement und einer mit einer Bediensoftware ausgestatteten Recheneinheit (die insbesondere in der Vorrichtung enthalten sind) die Applikationseinheiten, bzw. deren Markierungen eingescannt werden und ihre Position in der Vorrichtung anhand dieser eingescannten Information festgelegt wird oder ihre Position zusammen mit der Scaninformation in einem Rechensystem abgespeichert wird. Auf diese Weise kann anhand der Markierung eine eindeutige Zuordnung der Position einer Applikationseinheit zu ihrer Eigenschaft hergestellt werden bzw. eine bestimmte Anordnung von Applikationseinheiten in der Vorrichtung erreicht werden.

In einer bevorzugten Ausführungsform sind die Applikationseinheiten so angeordnet, dass die in einer Richtung jeweils benachbarte Applikationseinheit einen kleineren (oder größeren) Wert im Hinblick auf eine ihrer Eigenschaften aufweist. Auf diese Weise entsteht eine Abfolge von Applikationseinheiten.

In einer weiteren bevorzugten Ausführungsform sind die als Vorratsmodule ausgeführten Applikationseinheiten mittels eines Codesystems markiert (z.B. Barcode, RFID, Farben), womit die oben genannte Abfolge auch beliebig gestaltet werden kann, und/oder es sind die Filtermodule oder Werkstoffe, die in der Lagervorrichtung vorliegen codiert oder zumindest ihr Platz in der Lagervorrichtung

In einer bevorzugten Ausführungsform wird die Zuordnung der Applikationseinheiten bzw. der Einscanvorgang mit Informationsübertragung und die Steuerung der Bewegung der Applikationseinheiten über eine Recheneinheit mit einer Bediensoftware durchgeführt.

Die Druckfiltertestvorrichtung umfasst als Applikationseinheiten Filtermodule und ein Sensorsystem zur Druckmessung, wobei die Filtermodule im Fluss der Werkstoffschmelze (z.B. der Kunststoffschmelze) positionierbar sind und das Wechselsystem dazu ausgelegt ist, die Filtermodule automatisch auszuwechseln.

Geeignete Sensorsysteme sind dem Fachmann bekannt und umfassen insbesondere Drucksensoren, welche so angeordnet sind, dass sie eine Druckerhöhung vor dem Filter während der Extrusion einer definierten Materialmenge messen können.

Bevorzugte Filtermodule umfassen Filter-Haltestrukturen für Siebe/Filter oder für Gruppen von Sieben/Filtern. Bevorzugte Filtermodule umfassen Kartuschen in denen mindestens ein Filter/Sieb angeordnet ist oder die Filtermodule sind auf Bändern (z.B. Filter- oder Siebbändern) ausgebildet und entsprechen insbesondere Flächen auf diesen Bändern.

Bevorzugte Filtermodule umfassen Siebe und/oder Filter oder Kombinationen aus Filtern und/oder Sieben. Des Weiteren stellen bevorzugte Filtermodule Bereiche eines Sieb- oder Filterbandes dar. Als Filtermodule werden bevorzugt Granulate, gelochte Flächen oder Flächen aus Fäden, Bändern, Garnen und Fasern, oder Fliese aus Mineralien, Kunstoffen, Metallen oder Gläsern verwendet.

Bevorzugt ist das Wechselsystem dazu ausgelegt, ein Band beinhaltend die Filtermodule durch den Schmelzestrom zu bewegen, oder es ist dazu ausgelegt, Kartuschen in und aus einem Schmelzestrom zu bewegen.

Mittels des Wechselsystems werden die Filtermodule in den Messbereich verbracht und aus diesem entfernt. Bevorzugt umfasst die Vorrichtung dafür eine Öffnung, welche dazu geöffnet und nach Einbringen eines Filtermoduls wieder geschlossen wird. Die Bewegung der Öffnung wird bevorzugt elektrisch, mechanisch, hydraulisch oder mit Druckluft erreicht. In einer bevorzugten Ausführungsform wird die Öffnung geöffnet, die Haltestrukturen des Wechselsystems bewegt (z.B. mittels Keilen und Spindelantrieben), das Filtermodul in Position gebracht und die Öffnung wieder geschlossen.

Bevorzugt ist auch ein Aufbau mit mehreren konzentrischen Positionen von Filtermodulen. Damit können Filter/Siebe und Filter-/Siebpakete unterschiedlicher Dicke geordnet eingelegt werden.

Bei einer weiteren bevorzugten Ausführungsform sind die Filtermodule Bereiche auf einem bandförmigen Sieb- oder Filtermaterial.

Bevorzugt sind Bänder mit Sieb/Filterstrukturen der Gruppe gewebte oder gestrickte Siebe/Filter, Glasfasersiebe/-filter, gelaserte, kalandrierte oder genadelte Siebe/Filter, mit Öffnungen versehene Metallfolien, Vliese (z.B. Stapelfaservliese) oder Kombinationen der vorgenannten Strukturen nebeneinander und/oder übereinander ausgestattet.

In einer bevorzugten Ausführungsform ist das Wechselsystem so ausgestaltet, dass seine Haltestruktur ein zusammengerolltes, Filtermodul-Band in einer ersten Position aufnehmen kann, sein Bewegungssystem so ausgestaltet, dass es das Band abrollen und Bereiche des Bandes (auf denen Filtermodule ausgebildet sind) durch einen Schmelzestrom führen kann. Bevorzugt ist das Haltesystem zudem dazu ausgebildet, das durch den Schmelzestrom geführte Band wieder aufzunehmen und das Bewegungssystem dazu ausgelegt, das Band wieder zusammenzurollen, ggf. nach einer Aushärtung, wobei die Vorrichtung dazu insbesondere mit einem zusätzlichen Kühlmodul ausgestattet ist.

Es ist von Vorteil, wenn das Filtermodul in seiner Messposition druckdicht angeordnet ist, so dass die Schmelze nicht seitlich entweichen kann.

Bevorzugt weisen die Filtermodule (auch wenn sie auf Bändern vorliegen) an ihren Rändern eine dichtere Struktur auf. Eine solche Struktur kann z.B. durch eine dichtere Verwebung/Verstrickung oder eine gezielte Formung von einer geringeren Lochdichte an den Rändern erreicht werden. Durch solche Filtermodule wird die Dichtigkeit der Vorrichtung erhöht.

In einer diesbezüglich bevorzugten Ausführungsform werden Filtermodule verwendet, die insbesondere auf Bahnen angeordnet sind. Durch unterschiedliche Webarten z.B. unterschiedliche Feinheiten, sind diese Filtermodule als separate Module oder als hintereinander und/oder nebeneinander liegende Bereiche auf einer Bandfläche realisiert. Wichtig ist hier, dass zur Abdichtung gegen die Polymerschmelze die Siebbahnen jeweils längs und quer an den Randbereichen der Filtermodule dichter gewoben sind als im Zentrum der Filtermodule.

In einer bevorzugten Ausführungsform wird die Abdichtung durch Metallfolien, Harze, oder andere hochtemperaturfeste thermoplastische oder duroplastische Kunststoffe, Silikone, Fluorpolymere (z.B. Teflon) erreicht, wobei das jeweilige Material an den Randbereichen der Filtermodule an- oder aufgebracht wird.

Bevorzugt sind (insbesondere auf einem Band) Filtermodule dermaßen angelegt, dass im Randbereich des Filtermoduls auf einer Breite von 1 mm bis 5 cm, insbesondere auf einer Breite zwischen 5 mm bis 2 cm, ein Rand ausgearbeitet, welcher zur Verbesserung der Dichtigkeit eine dichtere Filter-/Siebstruktur und/oder eine Dichtungsmasse aufweist und einen Sieb-/Filterbereich umschließt, der dazu bestimmt ist, Messungen durchzuführen.

Mit der Druckfiltertestvorrichtung ist es möglich, nicht nur mit einer Siebgeometrie sondern nacheinander mit mehreren unterschiedlichen Filtermodulen zu messen, welche sich bezüglich ihrer Feinheit, Siebart oder Siebmaterialien unterscheiden. Ebenso ist es möglich, individuelle Siebpakete zusammenzustellen oder auch mit Filtermodulen zu messen, die Filtersande enthalten (z.B. aus Mineralien, Kunststoffen und/oder Metallen) und Kombinationen aus allen möglichen Materialien.

Mit dem Wechsel von Filtermodulen ergibt sich nicht nur die Möglichkeit einer automatisierten Materialprüfung, sondern auch die Möglichkeit für den jeweiligen Anwendungsfall Siebe/Filter zu optimieren. Denkbar sind z.B. Bänder mit verstärkter Kantenverwebung oder mit über der Länge unterschiedlichen Gewebestrukturen.

Auf diese Weise ist es möglich, für den Produktionsprozess die richtigen Filter zu finden.

Bei einer bevorzugten Ausführungsform umfasst die Vorrichtung ein Temperiersystem, welches dazu ausgelegt ist, die Filtermodule vor dem Messbereich vorzutemperieren und/oder nach der Messung zu kühlen. Bevorzugt werden die Filtermodule nach dem Ausstoß gekühlt und fallen geordnet in ein Auffangmagazin und werden gegebenenfalls individualisiert. Damit ist es möglich, die Siebe zur weiteren Analyse von Verunreinigungen zu verwenden.

Um einen konstanten Durchsatz des aufgeschmolzenen Werkstoffs zu erreichen, ist bevorzugt eine Schmelzepumpe und/oder ein Messsystem zur Durchflussmessung (z. B. eine Coriolis-Massedurchsatzmessung) zwischen Extruder/Schneckenförderer und Filter angeordnet. Bei der Verwendung eines Messsystems zur Durchflussmessung wird ein korrekter und konstanter Durchsatz bevorzugt über die Regelung der Schmelzebewegung (z.B. die Drehzahl der Schnecke im Extruder) erreicht.

Als Alternative zur Schmelzepumpe kann auch ein spezieller nachgeschalteter Schmelzeextruder mit einer druckaufbauenden Schneckengeometrie verwendet werden.

Als weitere Alternative kann aber auch im Basisextruder die Schnecke im Austragungsbereich mit entsprechenden Druckaufbauenden Geometrien wie z.B. speziellen Schneckengängen versehen sein.

Bei einer bevorzugten Ausführungsform umfasst die Vorrichtung mindestens einen Vorfilter. Dies ist von Vorteil für den Schutz der Vorrichtung, gerade wenn Rohstoffe mit gröberen Verunreinigungen wie z.B. Metallpartikel, Steinchen Holz vermessen werden. Dabei sollte der Vorfilter so geschaffen sein, dass er das Messergebnis nicht wesentlich beeinflusst. Insbesondere ist die Vorrichtung so gestaltet, dass auch dieser Filter automatisch gewechselt werden kann (bevorzugt mittels des Wechselsystems).

In einer bevorzugten Ausführungsform sind die Filtermodule so angeordnet, dass sie sich bei einem vollführten Wechsel durch den Schmelzestrom mit zunehmend steigenden oder fallenden Werten einer bestimmten Eigenschaft einander folgen. Zum Beispiel sind die Filtermodule so angeordnet, dass das in einer Richtung jeweils benachbarte Filtermodul eine kleinere (oder größere) Maschen-/Lochweite aufweist. Auf diese Weise entsteht eine Abfolge, mit der bei einer Messung abgestuft Grade der Werkstoffschmelze vermessen werden kann (z.B. der Reinheitsgrad).

In einer bevorzugten Ausführungsform ist die Vorrichtung so gestaltet, dass nicht der gesamte Schmelzestrom vermessen wird, sondern ein Teil des Schmelzestroms abgezweigt und im Rahmen eines Druckfiltertests vermessen wird. Dieser Teil wird anschließend bevorzugt wieder dem Schmelzestrom zugeführt. Insbesondere wird eine Probe aus dem Bereich der Förderschnecke oder nach der Förderschnecke entnommen. Auf diese Weise kann eine zeitlich gut aufgelöste Messung im Rahmen des Druckfiltertests ohne Unterbrechung eines Fertigungsprozesses erfolgen. Grundsätzlich können dabei alle Arten von ein bis mehrschneckenextrudern, Compoundern, Knetern (gleich und gegenläufig, zylindrische und konische Geometrien) als Aufbereitungsgeräte verwendet werden.

Die Dosiervorrichtung umfasst als Applikationseinheiten Vorratsmodule, wobei die Vorratsmodule so angeordnet sind, dass sie über dem Werkstoffeinlass des Systems zum Mischen oder Aufschmelzen von Werkstoffen positioniert oder positionierbar sind, wobei das Wechselsystem dazu ausgelegt ist, die Vorratsmodule automatisch bezüglich dieser Position und/oder bezüglich ihrer Funktion zu wechseln und deren Inhalt oder einen Teil des Inhalts in den Werkstoffeinlass des Systems zum Aufschmelzen oder Mischen von Werkstoffen zu entleeren.

Eine Auswechselung bezüglich der Position umfasst dabei eine Bewegung der betreffenden Vorratsmodule oder eine Bewegung des Entnahmesystems relativ zum Vorratsmodul. Eine Auswechselung bezüglich ihrer Funktion umfasst dabei eine gesteuerte Entleerung bzw. ein Stoppen der Entleerung.

Bevorzugte Vorratsmodule umfassen Aufnahmestrukturen für Werkstoffe, und Werkstoffauslässe, welche automatisch geöffnet und geschlossen werden können. Bevorzugte Vorratsmodule umfassen Kartuschen in denen mindestens ein Werkstoff oder Werkstoffgemisch angeordnet werden kann oder die Vorratsmodule sind auf Bändern (z.B. Förderbändern) ausgebildet und entsprechen insbesondere Flächenelementen auf diesen Bändern.

Das Öffnen und Schließen der Vorratsmodule wird bevorzugt elektrisch, mechanisch, hydraulisch oder mit Druckluft erreicht. In einer bevorzugten Ausführungsform wird das Vorratsmodul in Position gebracht die Öffnung geöffnet und die Öffnung nach einer vorgegebenen Zeit wieder geschlossen.

Bevorzugt wird die Entleerung eines Vorratsmoduls auch mittels Absaugen des Inhalts erreicht.

Gemäß einer bevorzugten Ausführungsform wird aus einem Vorratsmodul oder einer Gruppe von Vorratsmodulen gleichzeitig oder sukzessive mittels des Dosierelements (z.B. Dosierschnecke, Dosierscheibe oder Schieber) eine wohldosierte Menge des jeweils enthaltenen Werkstoffs entnommen und direkt oder über Führungselemente in den Extruder verbracht. Insbesondere umfasst dabei ein Vorratsmodul ein Grundmaterial für das herzustellende Produkt und andere Vorratsmodule Zusatzstoffe wie z.B. Farbstoffe. Auf diese Weise ist es möglich, Computergesteuert viele verschiedene Mischungskombinationen automatisch zu durchfahren.

Bevorzugt sind bei dieser Ausführungsform die Vorratsmodule nicht an dem Extruder befestigt sondern stehen mit diesem lediglich über die Führungselemente in Verbindung, wobei die Führungselemente (z.B. Kanäle, Schläuche oder Förderbänder) dazu ausgestaltet sind, Werkstoffe aus den Vorratsmodulen in den Extruder zu leiten.

In einer weiteren bevorzugten Ausführungsform ist zumindest eine Gruppe von Vorratsmodulen über einem Zuleitungssystem (z.B. einem Trichter) angebracht, wobei in diesem Falle eine Bewegung der Vorratsmodule nicht zwingend notwendig ist, jedoch ein gesteuertes Öffnen/Schließen der Vorratsmodule, so dass die Vorratsmodule nicht bezüglich ihres Ortes sondern bezüglich ihrer Funktion (Entleerung) gewechselt werden.

Bevorzugte Vorratsmodule enthalten Werkstoffe in Form von Pulvern, Granulate, Flüssigkeiten oder Gelen oder Mischungen von Folien, Formteilen, Rohren, Profilen, Produktionsrückständen und Abfällen und deren Bruchstücken.

Bevorzugt umfasst die Vorrichtung Einheiten zum Abschaben oder Abhobeln von Spänen von Festkörpern.

In einer bevorzugten Ausführungsform umfasst die Dosiervorrichtung, insbesondere mindestens ein oder jedes Vorratsmodul, eine Messeinheit zum Messen der entnommenen oder ausgeflossenen Werkstoffmenge. Bevorzugt sind volumetrische und/oder gravimetrische Messeinheiten, Messeinheiten für die Ausflusszeit oder der Länge des ausgeflossenen Materialstrangs.

Mit solchen Messeinheiten ist es möglich, eine klar und genau definierte Menge eines Werkstoffs in eine Maschine einzufüllen.

Bevorzugt ist das Wechselsystem dazu ausgelegt, auf einem Band ausgebildete Vorratsmodule zu einem Werkstoffeinlass einer Maschine zu bewegen, oder es ist dazu ausgelegt, Kartuschen zu diesem Werkstoffeinlass hin und wieder weg zu bewegen.

Bevorzugt ist auch ein Aufbau mit mehreren konzentrischen Positionen von Vorratsmodulen. Damit können unterschiedliche Werkstoffe in geordneter Form in eine Maschine eingebracht werden.

In einer bevorzugten Ausführungsform ist das Wechselsystem so ausgestaltet, dass seine Haltestruktur Vorratsmodule (insbesondere in Form von Kartuschen oder Tanks) umfasst, wobei bevorzugt mindestens ein Vorratsmodul einen Spülwerkstoff zum Reinigen der Maschine enthält.

Mit der Dosiervorrichtung ist es möglich, nicht nur ein einziges Produkt aus einer einzigen Werkstoffmischung herzustellen, sondern automatisiert mehrere Produkte aus verschiedenen Werkstoffrezepturen oder ein einziges Produkt, auf dem sich Bereiche unterschiedlicher Werkstoffrezepturen aneinanderreihen. Zudem ist es möglich, bei der Herstellung eines Produktes dieses zu vermessen und bei einer Abweichung von vorgegebenen Messparametern gezielt die Werkstoffrezeptur zu ändern um die Qualität des Produktes stets auf einem optimalen Standard zu halten.

Mit dem Wechsel von Vorratsmodulen ergibt sich nicht nur die Möglichkeit einer automatisierten Materialprüfung bzw. der automatisierten Herstellung von Testsamples, sondern auch die Möglichkeit, "über Nacht" automatisiert Rezepturen auszuprobieren. Dazu weist die Vorrichtung bevorzugt eine oben beschriebene Markiereinheit auf, die dazu ausgelegt ist, die hergestellten Testsamples zu markieren.

In einer bevorzugten Ausführungsform sind die Vorratsmodule so angeordnet, dass sie sich bei einem vollführten Wechsel mit zunehmend steigenden oder fallenden Werten einer bestimmten Eigenschaft einander folgen. Zum Beispiel sind die Vorratsmodule so angeordnet, dass das in einer Richtung jeweils benachbarte Vorratsmodule unterschiedliche Farbpigmente, oder Kunststoffgranulate unterschiedlicher Reinheit enthalten. Auf diese Weise entsteht eine Abfolge von Testsamples, die in einem direkten Zusammenhang zueinander stehen.

Mit der erfindungsgemäßen Vorrichtung wird es einem Benutzer ermöglicht, dass ein Herstellungs- oder Messprozess soweit automatisiert werden kann, dass ohne Bedienereingriff mehrere Proben hergestellt und/oder vermessen und die Ergebnisse automatisch protokolliert werden können, was die Messungen sehr effizient gestaltet.

Die Vorrichtung umfasst das System zum Aufschmelzen oder Mischen eines Werkstoffs. Geeignete Systeme zum Aufschmelzen bzw. Mischen von Werkstoffen sind dem Fachmann bekannt. Bevorzugt werden Mischtrommeln, Extruder oder Schneckenförderer.

Gemäß einer bevorzugten Ausführungsform ist zwischen Extruderkopf bzw. Förderschnecke und einem Messmodul bzw. einer Schmelzepumpe oder zwischen zwei Messmodulen mindestens ein Schmelzepuffer angeordnet. Dieser Schmelzepuffer sammelt einlaufende Schmelze und presst die Schmelze je nach Bedarf über einen Auslass heraus. Auf diese Weise ist eine kontinuierliche Messung selbst bei einem diskontinuierlichen Betrieb einer Anlage möglich.

Beispiele für bevorzugte Ausführungsformen der erfindungsgemäßen Vorrichtung sind in den Abbildungen dargestellt.
- Figur 1: zeigt schematisch eine Ausführungsform gemäß dem Stand der Technik;
- Figur 2: zeigt schematisch eine bevorzugte Ausführungsform einer Druckfiltertestvorrichtung;
- Figur 3: zeigt schematisch eine weitere bevorzugte Ausführungsform einer Druckfiltertestvorrichtung;
- Figur 4: zeigt schematisch eine bevorzugte Ausführungsform einer Dosiervorrichtung;
- Figur 5: zeigt schematisch ein Detail einer Dosiervorrichtung.
In Figur 1 ist eine Messeinrichtung für einen Druckfiltertest gemäß dem Stand der Technik dargestellt, wie sie oben bereits beschrieben wurde.

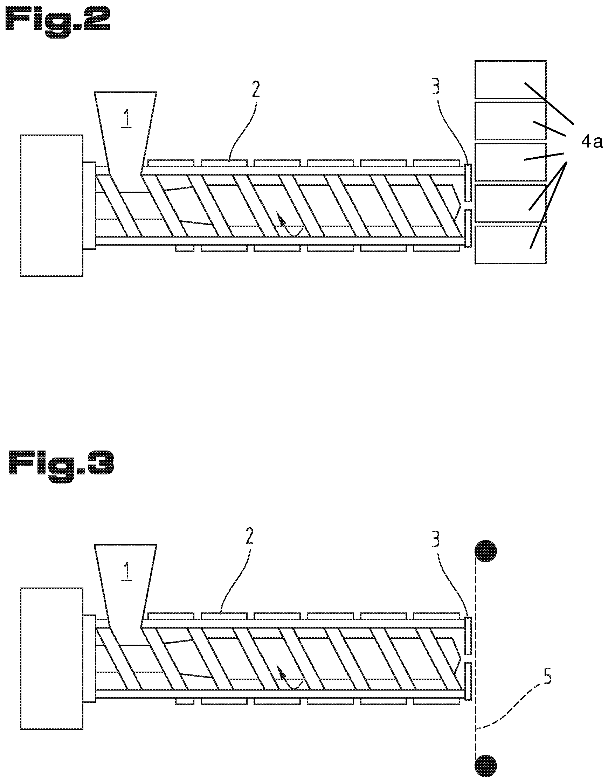

Figur 2 zeigt schematisch eine bevorzugte Ausführungsform einer Druckfiltertestvorrichtung. In eine Einfülleinheit, wie den dargestellten Trichter 1, wird ein Kunststoffgranulat oder - pulver in einen Schneckenförderer eingefüllt und durch diesen nach vorne zu einem Auslass 3 befördert. Während des Durchgangs durch den Schneckenförderer 2 bildet sich eine Kunststoffschmelze, die aus dem Auslass 3 austritt. Vor diesem Auslass 3 ist eine Reihe von Kartuschen 4 angeordnet, welche jede Filtermodule enthalten. Obwohl in der Darstellung eine lineare Anordnung der Kartuschen 4a gewählt wurde, ist auch eine radiale Anordnung (Revolver oder Karussell) bevorzugt. Die Kartuschen 4a können durch ein hier nicht dargestelltes Wechselsystem automatisch von oben nach unten oder von unten nach oben verschoben werden.
Figur 3 zeigt schematisch eine bevorzugte Ausführungsform einer weiteren Druckfiltertestvorrichtung. Auch hier wird mittels der bereits beschriebenen Maschine eine Kunststoffschmelze erzeugt und tritt am Auslass 3 aus. Im Unterschied zu Figur 2 werden hier jedoch keine Kartuschen zum Druckfiltertest verwendet, sondern ein Band 5, welches vor dem Auslass 3 abgerollt wird und sich für jede Messung mit dem Sensorsystem 1 ein Stück nach oben bzw. unten bewegt.

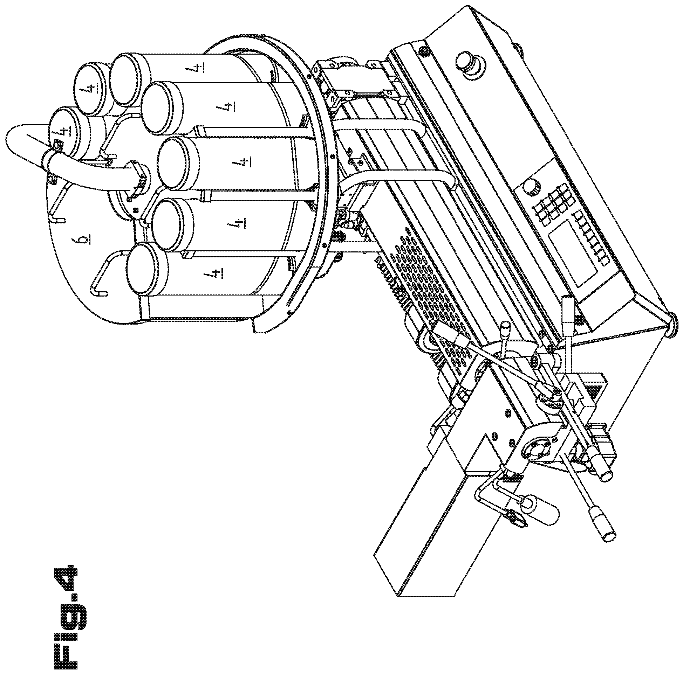

Figur 4 zeigt schematisch eine bevorzugte Ausführungsform einer Dosiervorrichtung an einem Extruder zur Kunststoffherstellung, die dazu ausgestaltet ist, in dessen Werkstoffeinlass Stoffe einzufüllen. Sie umfasst Vorratsmodule in Form von Kartuschen 4, die auf einer runden Fläche in Form eines Kreissegments angeordnet sind. Zusätzlich ist ein weiteres Vorratsmodul in Form eines Tanks 6 angeordnet, der ein Reinigungsmittel enthält und den Kreis komplettiert. Die Vorrats segmente sind drehbar und können durch ein Wechselsystem einzeln über den Trichter der Maschine positioniert werden und ihren Inhalt dort hinein komplett oder teilweise entleeren.

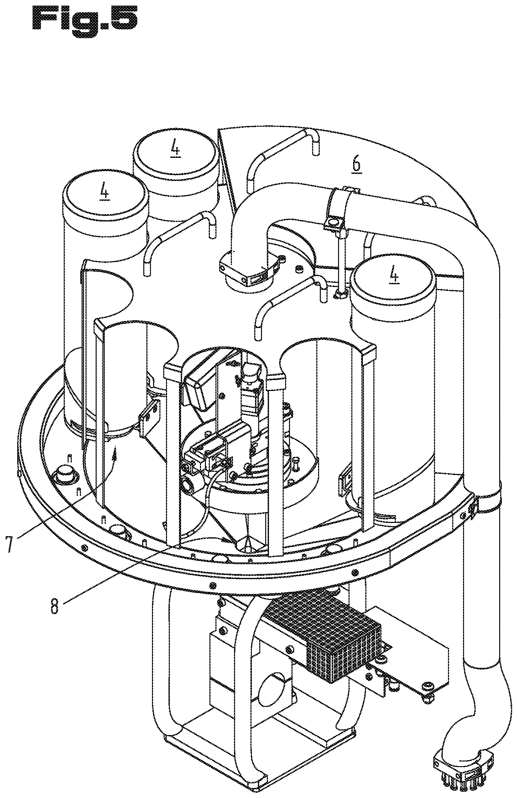

Figur 5 zeigt schematisch ein Detail der in Figur 4 verwendeten Dosiervorrichtung. Hier sind der Tank 6 und eine der Kartuschen 4 aufgeschnitten. Über die Kartuschenöffnung 7, die im Bedarfsfall automatisch geöffnet wird, kann der Inhalt der betreffenden Kartusche, z.B. ein Kunststoffgranulat, Farbpigmente oder Additive nach unten austreten und werden über die trichterförmige Zuleitungseinheit 8 in den Werkstoffeinlass der Maschine geleitet.
Die Ausführungsbeispiele zeigen mögliche Ausführungsvarianten der Erfindung, wobei an dieser Stelle bemerkt sei, dass die in den Ansprüchen definierte Erfindung nicht auf die speziell dargestellten Ausführungsvarianten derselben eingeschränkt ist. Diverse Kombinationen der einzelnen Ausführungsvarianten sind untereinander möglich.

### Bezugszeichenaufstellung

- 1: Trichter
- 2: Schneckenförderer
- 3: Auslass
- 4: Kartusche
- 4a: Kartusche 5 Band
- 6: Tank
- 7: Kartuschenöffnung
- 8: Zuleitungseinheit

## Patentansprüche

1. Vorrichtung für die Herstellung und zum Testen von Werkstücken, aufweisend
- ein System (2) zum Mischen oder Aufschmelzen von Werkstoffen, das einen Werkstoffeinlass und einen Materialauslass (3) aufweist,
- eine Druckfiltertestvorrichtung, die als Filtermodule ausgebildete Applikationseinheiten, ein Sensorsystem zur Druckmessung und ein Wechselsystem umfasst, wobei die Filtermodule (4a) im Fluss der Werkstoffschmelze positionierbar sind, das Wechselsystem dazu ausgelegt ist, die Filtermodule (4a) bezüglich ihrer Position automatisch auszuwechseln, und die Druckfiltertestvorrichtung fest mit dem Werkstoffauslass des Systems zum Mischen oder Aufschmelzen von Werkstoffen verbindbar oder verbunden ist, und
- eine Dosiervorrichtung, welche als Vorratsmodule (4) ausgebildete Applikationseinheiten und ein Wechselsystem umfasst, wobei die Dosiervorrichtung fest mit dem Werkstoffeinlass des Systems (2) zum Mischen oder Aufschmelzen von Werkstoffen verbindbar oder verbunden ist, die Vorratsmodule (4) so angeordnet sind, dass sie über dem Werkstoffeinlass des Systems (2) zum Mischen oder Aufschmelzen von Werkstoffen positioniert oder positionierbar sind, und das Wechselsystem dazu ausgelegt ist, die Vorratsmodule (4) automatisch bezüglich dieser Position und/oder bezüglich ihrer Funktion zu wechseln und den Inhalt oder einen Teil des Inhalts der Vorratsmodule (4) in den Werkstoffeinlass des Systems (3) zum Aufschmelzen oder Mischen von Werkstoffen zu entleeren.

2. Vorrichtung nach Anspruch 1, **dadurch gekennzeichnet, dass** das Wechselsystem der Dosiervorrichtung eine Haltestruktur zum Halten der Vorratsmodule (4), ein Bewegungssystem zum Bewegen der Vorratsmodule (4) und eine Steuereinheit zur Steuerung des Wechselsystems der Dosiervorrichtung umfasst.

3. Vorrichtung nach Anspruch 2, **dadurch gekennzeichnet, dass** das Wechselsystem der Dosiervorrichtung so ausgestaltet ist, dass seine Haltestruktur die Vorratsmodule insbesondere in Form von Kartuschen (4) oder Tanks umfasst, wobei bevorzugt mindestens ein Vorratsmodul (6) einen Spülwerkstoff zum Reinigen der Maschine enthält.

4. Vorrichtung nach einem der vorangehenden Ansprüche, **dadurch gekennzeichnet, dass** die Dosiervorrichtung eine Markiereinheit umfasst und dazu ausgelegt ist, die Vorratsmodule (4) automatisch zu kennzeichnen, insbesondere mittels Zeichen, Barcodes, RFID-Elementen, Gravuren, oder anderen Mustern, wobei die Dosiervorrichtung insbesondere dazu ausgelegt ist, dass über ein Scanelement und einer mit einer Bediensoftware ausgestatteten Recheneinheit Markierungen an Applikationseinheiten eingescannt werden und ihre Position in der Dosiervorrichtung anhand dieser eingescannten Information festgelegt wird oder ihre Position zusammen mit der Scaninformation in einem Rechensystem abgespeichert wird.

5. Vorrichtung nach einem der vorangehenden Ansprüche, **dadurch gekennzeichnet, dass** die Vorratsmodule (4) Aufnahmestrukturen für Werkstoffe und Werkstoffauslässe umfassen, welche automatisch geöffnet und geschlossen werden können, wobei bevorzugte Vorratsmodule Kartuschen (4) umfassen, in denen mindestens ein Werkstoff oder Werkstoffgemisch angeordnet werden kann oder dass die Vorratsmodule (4) insbesondere auf Bändern ausgebildet sind, oder dass die Vorrichtung eine Absaugeinheit umfasst.

6. Vorrichtung nach einem der vorangehenden Ansprüche, **dadurch gekennzeichnet, dass** die Vorratsmodule (4) Werkstoffe in Form von Pulvern, Granulate, Flüssigkeiten oder Gelen oder Mischungen von Folien, Formteilen, Rohren, Profilen, Produktionsrückständen und Abfällen und deren Bruchstücken enthalten.

7. Vorrichtung nach einem der vorangehenden Ansprüche, **dadurch gekennzeichnet, dass** die Dosiervorrichtung, insbesondere mindestens ein oder jedes Vorratsmodul (4), eine Messeinheit zum Messen der entnommenen oder ausgeflossenen Wirkstoffmenge umfasst, bevorzugt volumetrische und/oder gravimetrische Messeinheiten, Messeinheiten für die Ausflusszeit oder der Länge des ausgeflossenen Materialstrangs.

8. Vorrichtung nach einem der Ansprüche 1 bis 7, **dadurch gekennzeichnet, dass** die Druckfiltertestvorrichtung eine Lagereinheit umfasst, die dazu ausgelegt ist, Filtermodule zu lagern, wobei diese Lagereinheit vorzugsweise dazu ausgelegt ist, eine Rolle eines Filterbandes oder separate Filtermodule zu lagern, wobei die Lagereinheit insbesondere dazu ausgelegt ist, dass die Filtermodule entsprechend konditioniert werden, insbesondere getrocknet, gekühlt, beheizt oder befeuchtet werden.

9. Vorrichtung nach Anspruch 8, **dadurch gekennzeichnet, dass** das Wechselsystem der Druckfiltertestvorrichtung dazu ausgelegt ist, Filtermodule aus der Lagereinheit in eine Applikationseinheit und/oder nach außen zu verbringen und/oder aus einer Applikationseinheit und/oder von außen in die Lagereinheit zu überführen und/oder von außen in eine Applikationseinheit und/oder wieder zurück nach außen zu bewegen.

10. Vorrichtung nach einem der vorangehenden Ansprüche, **dadurch gekennzeichnet, dass** die Filtermodule Filter-Haltestrukturen für Siebe/Filter oder für Gruppen von Sieben/Filtern umfassen, insbesondere Kartuschen in denen mindestens ein Filter/Sieb angeordnet ist oder dass die Filtermodule vorzugsweise auf Bändern ausgebildet sind, wobei bevorzugte Filtermodule Siebe und/oder Filter oder Kombinationen aus Filtern und/oder Sieben umfassen.

11. Vorrichtung nach einem der vorangehenden Ansprüche, **dadurch gekennzeichnet, dass** die Filtermodule Bereiche auf einem bandförmigen Sieb- oder Filtermaterial sind, wobei Bänder mit Sieb/Filterstrukturen der Gruppe gewebte oder gestrickte Siebe/Filter, Glasfasersiebe/-filter, gelaserte, kalandrierte oder genadelte Siebe/Filter, mit Öffnungen versehene Metallfolien, Vliese oder Kombinationen der vorgenannten Strukturen nebeneinander und/oder übereinander bevorzugt sind.

12. Vorrichtung nach einem der vorangehenden Ansprüche, **dadurch gekennzeichnet, dass** die Filtermodule an ihren Rändern eine dichtere Struktur aufweisen als in ihrem Zentrum, wobei eine solche Struktur insbesondere durch eine dichtere Verwebung/Verstrickung oder eine gezielte Formung von einer geringeren Lochdichte an den Rändern erreicht wird oder dass die Abdichtung insbesondere durch Metallfolien, Harze, oder andere hochtemperaturfeste thermoplastische oder duroplastische Kunststoffe erreicht wird, wobei das jeweilige Material an den Randbereichen der Filtermodule an- oder aufgebracht wird.

13. Vorrichtung nach einem der vorangehenden Ansprüche, **dadurch gekennzeichnet, dass** die Druckfiltertestvorrichtung ein Temperiersystem umfasst, welches dazu ausgelegt ist, die Filtermodule vor dem Messbereich vorzutemperieren und/oder nach der Messung zu kühlen, wobei die Filtermodule bevorzugt nach dem Ausstoß gekühlt werden und geordnet in ein Auffangmagazin fallen und insbesondere individualisiert werden.

14. Vorrichtung nach einem der vorangehenden Ansprüche, **dadurch gekennzeichnet, dass** die Druckfiltertestvorrichtung so gestaltet ist, dass nicht der gesamte Schmelzestrom vermessen wird, sondern ein Teil des Schmelzestroms abgezweigt und im Rahmen eines Druckfiltertests vermessen wird, wobei dieser Teil anschließend bevorzugt wieder dem Schmelzestrom zugeführt wird.

15. Vorrichtung nach einem der vorangehenden Ansprüche, **dadurch gekennzeichnet, dass** das System zum Aufschmelzen oder Mischen eines Werkstoffs eine Mischtrommel, ein Extruder oder ein Schneckenförderer ist.

## Claims

1. Apparatus for manufacturing and testing workpieces, comprising
- a system (2) for mixing or melting materials having a material inlet and a material outlet (3),
- a pressure filter test device comprising application units in the form of filter modules, a sensor system for measuring pressure and a replacement system, wherein the filter modules (4a) can be positioned in the flow of the material melt, the replacement system being configured to automatically replace the filter modules (4a) in respect of the position thereof, and the pressure filter test device can be connected or is connected fixedly to the material outlet of the system for mixing or melting materials, and
- a dispensing device comprising application units in the form of supply modules (4) and a replacement system, wherein the dispensing device can be connected or is connected fixedly to the material inlet of the system (2) for mixing or melting materials, which supply modules (4) are disposed so that they are positioned or can be positioned above the material inlet of the system (2) for mixing or melting materials, and the replacement system is configured to automatically replace the supply modules (4) in respect of this position and/or in respect of the function thereof and empty the contents or a part of the contents of the supply modules (4) into the material inlet of the system (3) for melting or mixing materials.

2. Apparatus according to claim 1, **characterized in that** the replacement system of the dispensing device comprises a holder structure for holding the supply modules (4), a moving system for moving the supply modules (4) and a control unit for controlling the replacement system of the dispensing device.

3. Apparatus according to claim 2, **characterized in that** the replacement system of the dispensing device is configured such that its holder structure comprises the supply modules in particular in the form of cartridges (4) or tanks, wherein at least one supply module (6) preferably contains a flushing material for cleaning the machine.

4. Apparatus according to one of the preceding claims, **characterized in that** the dispensing device comprises a marker unit which is configured to automatically identify the supply modules (4), in particular by means of marks, bar codes, RFID elements, engraving or other patterns, wherein the dispensing device is configured in particular to scan markings on application units by means of a scanning element and a computer unit configured with operating software, and their position in the dispensing device is determined on the basis of this scanned information or their position together with the scanned information is stored in a computer system.

5. Apparatus according to one of the preceding claims, **characterized in that** the supply modules (4) comprise structures for receiving materials and material outlets which can be automatically opened and closed, wherein preferred supply modules comprise cartridges (4) in which at least one material or material mixture can be placed or that the supply modules (4) are provided on belts in particular or that the apparatus comprises a suction unit.

6. Apparatus according to one of the preceding claims, **characterized in that** the supply modules (4) contain materials in the form of powders, granulates, liquids or gels or mixtures of films, molded parts, pipes, sections, production residues and waste and scraps thereof.

7. Apparatus according to one of the preceding claims, **characterized in that** the dispensing device comprises, in particular for at least one or every supply module (4), a measuring unit for measuring the quantity of material that has been removed or dispensed, preferably volumetric and/or gravimetric measuring units, units for measuring the dispensing time or length of the dispensed material.

8. Apparatus according to one of claims 1 to 7, **characterized in that** the pressure filter test device comprises a storage unit configured for storing filter modules, wherein this storage unit is preferably configured to store a roller of a filter belt or separate filter modules, wherein the storage unit is configured in particular to condition the filter modules as required, in particular so that they are dried, cooled, heated or wetted.

9. Apparatus according to claim 8, **characterized in that** the replacement system of the pressure filter test device is configured to move filter modules out of the storage unit into an application unit and/or move them outside and/or transfer them from an application unit and/or from outside into the storage unit and/or move them from outside into an application unit and/or back out again.

10. Apparatus according to one of the preceding claims, **characterized in that** the filter modules comprise filter-holder structures for screens/filters or for groups of screens/filters, in particular cartridges in which at least one filter/screen is disposed or that the filter modules are preferably formed on belts, wherein preferred filter modules comprise screens and/or filters or combinations of filters and/or screens.

11. Apparatus according to one of the preceding claims, **characterized in that** the filter modules are regions on a belt-shaped screen or filter material, wherein preferred belts are ones with screen/filter structures selected from the group comprising woven or knitted screens/filters, glass fiber screens/filters, lasered, calendared or needled screens/filters, metal foils provided with orifices, fleeces or combinations of the aforementioned structures next to one another and/or one on top of the other.

12. Apparatus according to one of the preceding claims, **characterized in that** the filter modules have a denser structure at their edges than at their center, wherein such a structure may be achieved in particular using a denser weave/knit or a specific shape with a lesser density of holes at the edges, or the seal is achieved in particular by means of metal foils, resins or other thermoplastic or thermosetting plastics that are resistant to high temperature, wherein the respective material is applied to or on the peripheral regions of the filter modules.

13. Apparatus according to one of the preceding claims, **characterized in that** the pressure filter test device comprises a tempering system configured to pre-heat the filter modules upstream of the measurement area and/or to cool them after the measurement, wherein, after having been ejected, the filter modules are preferably cooled and drop in an orderly manner into a catch magazine and are separated in particular.

14. Apparatus according to one of the preceding claims, **characterized in that** the pressure filter test device is configured so that it is not the entire melt flow that is measured but instead a part of the melt flow is diverted and measured in the context of a filter pressure test, and this part is then preferably returned to the melt flow again.

15. Apparatus according to one of the preceding claims, **characterized in that** the system for melting or mixing a material is a mixing drum, an extruder or a screw conveyor.

## Revendications

1. Dispositif pour la production et le test de pièces, présentant
- un système (2) qui est destiné au mélange ou à la fusion de matériaux et qui présente une entrée de matériau et une sortie de matière (3),
- un dispositif de test de filtrage sous pression qui comprend des unités d'application constituées en tant que modules de filtrage, un système de capteur pour la mesure de pression et un système d'échange, les modules de filtrage (4a) pouvant être positionnés dans le flux du matériau fondu,
le système d'échange étant conçu pour échanger automatiquement les modules de filtrage (4a) en ce qui concerne leur position, et le dispositif de test de filtrage sous pression pouvant être raccordé ou étant raccordé fixement à la sortie de matériau du système qui est destiné au mélange ou à la fusion de matériaux, et
- un dispositif de dosage qui comprend des unités d'application constituées en tant que modules de stockage (4) et un système d'échange, le dispositif de dosage pouvant être raccordé ou étant raccordé fixement à l'entrée de matériau du système (2) destiné au mélange ou à la fusion de matériaux, les modules de stockage (4) étant disposés de telle sorte qu'ils sont positionnés ou peuvent être positionnés par le biais de l'entrée du matériau du système (2) destiné au mélange ou à la fusion de matériaux, et le système d'échange étant conçu pour échanger automatiquement les modules de stockage (4) en ce qui concerne cette position et/ou en ce qui concerne leur fonction, et pour vider le contenu ou une partie du contenu des modules de stockage (4) dans l'entrée de matériau du système (3) destiné au mélange ou à la fusion de matériaux.

2. Dispositif selon la revendication 1, **caractérisé en ce que** le système d'échange du dispositif de dosage comprend une structure de retenue destinée à retenir les modules de stockage (4), un système de déplacement destiné au déplacement des modules de stockage (4), et une unité de commande destinée à la commande du système d'échange du dispositif de dosage.

3. Dispositif selon la revendication 2, **caractérisé en ce que** le système d'échange du dispositif de dosage est conçu de telle sorte que sa structure de retenue comprend les modules de stockage en particulier sous forme de cartouches (4) ou de réservoirs, de préférence au moins un module de stockage (6) contenant un matériau de lavage destiné au nettoyage de la machine.

4. Dispositif selon l'une des revendications précédentes, **caractérisé en ce que** le dispositif de dosage comprend une unité de marquage et est conçu pour caractériser automatiquement les modules de stockage (4), en particulier au moyen de signes, de codes à barres, d'éléments RFID, de gravures ou d'autres motifs, le dispositif de dosage étant en particulier conçu pour que, par le biais d'un élément de scannage et d'une unité de calcul équipée d'un logiciel d'utilisation, des marquages sur des unités d'application soient scannés et pour que leur position dans le dispositif de dosage soit constatée à l'aide de cette information scannée ou pour que leur position soit enregistrée dans un système de calcul de concert avec l'information numérisée.

5. Dispositif selon l'une des revendications précédentes, **caractérisé en ce que** les modules de stockage (4) comprennent des structures de réception pour matériaux et des sorties de matériaux qui peuvent être ouvertes et fermées automatiquement, des modules de stockage préférés comprenant des cartouches (4) dans lesquelles au moins un matériau ou un mélange de matériaux peut être disposé, ou **en ce que** les modules de stockage (4) sont constitués en particulier sur des bandes, ou **en ce que** le dispositif comprend une unité d'aspiration.

6. Dispositif selon l'une des revendications précédentes, **caractérisé en ce que** les modules de stockage (4) contiennent des matériaux sous forme de poudres, granulés, liquides ou gels ou mélanges de feuilles, pièces moulées, tubes, profilés, résidus de production et déchets et de leurs fragments.

7. Dispositif selon l'une des revendications précédentes, **caractérisé en ce que** le dispositif de dosage, en particulier au moins un ou chaque module de stockage (4), comprend une unité de mesure destinée à la mesure de la quantité de matériau prélevée ou écoulée, de préférence des unités de mesure volumétriques et/ou gravimétriques, des unités de mesure pour la durée d'écoulement, ou de la longueur du tronçon de matériau écoulé.

8. Dispositif selon l'une des revendications 1 à 7, **caractérisé en ce que** le dispositif de test de filtrage sous pression comprend une unité de support qui est conçue pour supporter des modules de filtrage, cette unité de support étant de préférence conçue pour supporter un rouleau d'une bande de filtrage ou des modules de filtrage séparés, l'unité de support étant en particulier conçue de telle sorte que les modules de filtrage sont conditionnés en conséquence, en particulier séchés, refroidis, chauffés ou humidifiés.

9. Dispositif selon la revendication 8, **caractérisé en ce que** le système d'échange du dispositif de test de filtrage sous pression est conçu pour transporter des modules de filtrage à partir de l'unité de support vers une unité d'application et/ou vers l'extérieur, et les transférer à partir d'une unité d'application et/ou de l'extérieur vers l'unité de support et/ou pour les déplacer à partir de l'extérieur dans une unité d'application et/ou en retour vers l'extérieur.

10. Dispositif selon l'une des revendications précédentes, **caractérisé en ce que** les modules de filtrage comprennent des structures de retenue de filtrage pour des tamis/filtres ou pour des groupes de tamis/filtres, en particulier des cartouches dans lesquelles est disposé au moins un tamis/filtre, ou **en ce que** les modules de filtrage sont de préférence constitués sur des bandes, des modules de filtrage préférés comprenant des tamis et/ou filtres ou des combinaisons de filtres et/ou tamis.

11. Dispositif selon l'une des revendications précédentes, **caractérisé en ce que** les modules de filtrage sont des zones sur un matériau de tamisage ou de filtrage en forme de bande, des bandes avec des structures de tamis/filtres du groupe étant de préférence des tamis/filtres tissés ou tricotés, des tamis/filtres en fibre de verre, des tamis/filtres traités au laser, calandrés ou aiguilletés, des feuilles métalliques munis d'orifices, des non-tissés ou des combinaisons des structures précitées, juxtaposés et/ou superposés.

12. Dispositif selon l'une des revendications précédentes, **caractérisé en ce que** les modules de filtrage présentent sur leurs bords une structure plus dense qu'en leur centre, une telle structure étant obtenue en particulier par un tissage/tricotage plus dense ou par une formation délibérée d'une moindre densité de trous sur les bords, ou **en ce que** l'étanchéité est obtenue en particulier par des feuilles métalliques, des résines ou d'autres matières plastiques thermoplastiques ou thermodurcissables résistant aux températures élevées, le matériau respectif étant mis en place ou appliqué sur les zones de bord des modules de filtrage.

13. Dispositif selon l'une des revendications précédentes, **caractérisé en ce que** le dispositif de test de filtrage sous pression comprend un système de régulation de température qui est conçu pour pré-réguler les modules de filtrage avant la zone de mesure et/ou pour les refroidir après la mesure, les modules de filtrage étant de préférence refroidis après l'éjection et tombant de façon ordonnée dans un magasin de récupération et étant en particulier individualisés.

14. Dispositif selon l'une des revendications précédentes, **caractérisé en ce que** le dispositif de test de filtrage sous pression est constitué de telle sorte que la mesure ne porte pas sur la totalité du flux fondu, mais qu'une partie du flux fondu est dérivée et est mesurée dans le cadre d'un test de filtrage sous pression, cette partie étant ensuite de préférence ramenée au flux fondu.

15. Dispositif selon l'une des revendications précédentes, **caractérisé en ce que** le système destiné au mélange ou à la fusion d'un matériau est un tambour de mélange, une extrudeuse ou un convoyeur à vis.
